# EUROPEAN PATENT APPLICATION

(11) **EP 2 506 148 A1**
(43) Date of publication of application: **03.10.2012**
(21) Application number: 12001069.9
(22) Date of filing: 17.02.2012
(51) Int. Cl.: G06F 13/00, G06F 3/16, G11B 20/10

(54) **Method and system for processing audio signals in a central audio hub**

(30) Priority: 31.03.2011 US 201113077458
(71) Applicant: Broadcom Corporation, Irvine, CA 92617 (US)
(72) Inventor: Cheng, Taiyi, 95014 Cupertino CA (US); Kong, Hongwei, 07834 Denville NJ (US); Sollenberger, Nelson, 07727 Farmingdale NJ (US); Fullerton, Mark, 78739 Austin TX (US); Lee, Chin Sieh, 92612 Irvine CA (US); Pong, Timothy, 90703 Cerritos CA (US); Feng, Yafan, 92618 Irvine CA (US); Simeon, Claire Marie Suzanne, 95035 Milpitas CA (US); Liu, Michael, 94303 Palo Alto CA (US); Ma, Kenneth, 95014 Cupertino CA (US); Zhao, Chaoyang, 92620, Irvine CA (US)
(74) Representative: Jehle, Volker Armin

(57) **Abstract**

A central audio hub, comprising an audio switch, a bus matrix, and an audio buffer, is triggered to read audio samples of an audio stream from the audio buffer. The central audio hub routes the audio samples via the bus matrix to one or more surrounding audio modules such as an audio codec and an audio interface communicatively coupled to the central audio hub. The audio stream may be directly from an external application processor or from an external DDR. With the audio stream from the DDR, a DMA controller may fetch the audio samples from the DDR in response to a request received from the audio buffer, and store the fetched audio samples into the audio buffer for routing. The audio switch may be triggered at a determined sampling rate to read the audio samples from the audio buffer utilizing a determined sample format, and to route the audio samples to the surrounding audio modules.

## Description

### CROSS-REFERENCE TO RELATED APPLICATIONS/INCORPORATION BY REFERENCE

None.

### FIELD OF THE INVENTION

Certain embodiments of the invention relate to communication systems. More specifically, certain embodiments of the invention relate to a method and system for processing audio signals in a central audio hub.

### BACKGROUND OF THE INVENTION

Audio capability is one feature incorporated into most multimedia devices such as portable multimedia devices. Multimedia devices may typically contain a number of analog and digital audio sources in diverse data formats. The multimedia devices may be required to convert and mix combinations of these audio streams before outputting to the real world via various audio transducers such as, for example, ear speakers, loudspeakers, headphones and/or headsets.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and/or system for processing audio signals in a central audio hub, substantially as shown in and/or described in connection with at least one of the figures, as set forth more completely in the claims.
According to an aspect, a method is provided for communication, the method comprising:
in a central audio hub that comprises an audio switch, a bus matrix, and an audio buffer:
   reading audio samples of an audio stream from said audio buffer in response to event triggers from said audio switch; and
   routing said audio samples over said bus matrix to one or more of a plurality of audio modules that are communicatively coupled to said central audio hub, wherein said plurality of audio modules comprise an audio codec, an audio interface.
Advantageously, said audio stream is received by said central audio hub directly from an external application processor.
Advantageously, said audio stream is received by said central audio hub from an external double data rate memory.
Advantageously, the method further comprises receiving by accessing a direct memory access controller, a request from said audio buffer for said audio samples of said audio stream in said external double data rate memory.
Advantageously, the method further comprises fetching by said direct memory access controller, said audio samples of said audio stream from said external double data rate memory in response to said request.
Advantageously, the method further comprises storing said fetched audio samples of said audio stream into said audio buffer for said routing.
Advantageously, the method further comprises determining a sampling rate and a sample format for said audio samples of said audio stream in said audio buffer.
Advantageously, the method further comprises generating by said audio switch, said event triggers at said determined sampling rate.
Advantageously, the method further comprises reading said audio samples of said audio stream, utilizing said determined sample format, from said audio buffer in response to said generated event triggers.
Advantageously, the method further comprises routing said audio samples in said determined sample format to said one or more of said plurality of audio modules.
According to an aspect, a system is provided for communication, the system comprising:
one or more processors and/or circuits for use in a central audio hub, said one or more processors and/or circuits comprises an audio switch, a bus matrix, and an audio buffer, wherein said one or more processors and/or circuits are operable to:
   read audio samples of an audio stream from said audio buffer in response to event triggers from said audio switch; and
   route said audio samples over said bus matrix to one or more of a plurality of audio modules that are communicatively coupled to said central audio hub, wherein said plurality of audio modules comprise an audio codec, an audio interface.
Advantageously, said audio stream are received by said central audio hub directly from an external application processor.
Advantageously, said audio stream are received by said central audio hub from an external double data rate memory.
Advantageously, said one or more processors and/or circuits are operable to receive by accessing a direct memory access controller, a request from said audio buffer for said audio samples of said audio stream in said external double data rate memory.
Advantageously, said one or more processors and/or circuits are operable to fetch by said direct memory access controller, said audio samples of said audio stream from said external double data rate memory in response to said request.
Advantageously, said one or more processors and/or circuits are operable to store said fetched audio samples of said audio stream into said audio buffer for said routing.
Advantageously, said one or more processors and/or circuits are operable to determine a sampling rate and a sample format for said audio samples of said audio stream in said audio buffer..
Advantageously, said one or more processors and/or circuits are operable to generate by said audio switch, said event triggers at said determined sampling rate.
Advantageously, said one or more processors and/or circuits are operable to read said audio samples of said audio stream, utilizing said determined sample format, from said audio buffer in response to said generated event triggers.
Advantageously, said one or more processors and/or circuits are operable to route said audio samples in said determined sample format to said one or more of said plurality of audio modules.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a diagram illustrating an exemplary mobile device that utilizes a central audio hub for processing audio signals, in accordance with an embodiment of the invention.

FIG. 2 is a diagram illustrating an exemplary architecture for a central audio hub, in accordance with an embodiment of the invention.

FIG. 3 is a block diagram illustrating an exemplary semi synchronous audio switch implemented in a central audio hub that is operable to route audio samples among audio modules of the central audio hub, in accordance with an embodiment of the invention.

FIG. 4 is a block diagram illustrating an exemplary data flow in a central audio hub for routing audio samples of a single audio stream from an external audio source to a destination audio module of the central audio hub, in accordance with an embodiment of the invention.

FIG. 5 is a block diagram exemplary steps that may be performed by a central audio hub to route audio samples of a single audio stream from an external audio source to one or more destination audio modules of the central audio hub, in accordance with an embodiment of the invention.

FIG. 6 is a block diagram illustrating an exemplary data flow in a central audio hub for routing audio samples of a single audio stream between an external double data rate memory and a destination audio module of the central audio hub, in accordance with an embodiment of the invention.

FIG. 7 is a block diagram illustrating exemplary steps that may be performed by a central audio hub to route audio samples of a single audio stream between an external double data rate memory and one or more audio modules of the central audio hub, in accordance with an embodiment of the invention.

### DETAILED DESCRIPTION OF THE INVENTION

Certain embodiments of the invention may be found in a method and system for processing audio signals in a central audio hub. In various embodiments of the invention, a central audio hub may comprise various audio processing modules such as, for example, an audio switch (audio SW), an Advanced Peripheral Bus (APB) bus matrix, a Direct memory access (DMA) controller (DMAC), an audio codec, an audio interface and an audio FIFO buffer. The central audio hub may read audio samples of a desired audio stream from the audio FIFO buffer. For example, the audio SW may be triggered by event triggers for moving audio samples from a source to one or more destinations. The event triggers may be generated by a rate generator inside the audio SW at various audio sampling rates such as, for example, 8KHz and 16KHz. The audio SW may read audio samples, via the DMAC, from the audio FIFO buffer in response to the event triggers. The audio SW may route the audio samples from the audio FIFO buffer to one or more destination audio modules that are communicatively coupled to the central audio hub. The audio stream may be received by central audio hub directly from an external application processor such as a FM radio receiver, or may be received directly from an external double data rate (DDR) memory. In instances where the audio stream is rendered by the DDR memory, the DMAC may fetch the audio from the DDR memory in response to a request received from the audio FIFO buffer. The DMAC may store the fetched audio samples into the audio FIFO buffer for routing among the surrounding audio modules. The surrounding audio modules are referred to one or more audio modules that are attached to the central audio hub. In an exemplary embodiment of the invention, an audio sampling rate and a sample format may be determined for the audio samples stored in the audio FIFO buffer before routing starts. The rate generator in the audio SW may generate the event triggers at the determined audio sampling rate. The audio SW may be triggered by the generated event triggers to read the audio samples from the audio FIFO buffer utilizing the determined sample format. The audio SW may then route the audio samples to the one or more destination audio modules.

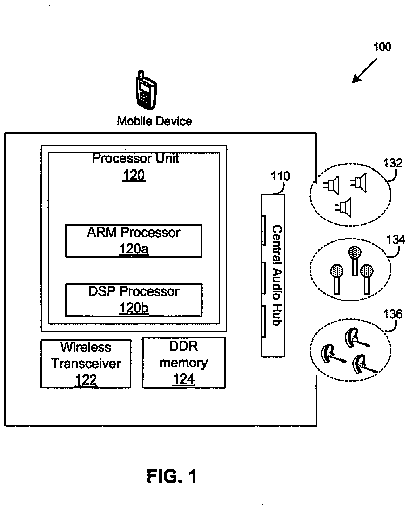

FIG. 1 is a diagram illustrating an exemplary mobile device that incorporates a central audio hub for processing audio signals, in accordance with an embodiment of the invention. Referring to FIG. 1, there is shown a mobile device 100 comprising a central audio hub 110, a processor unit 120, a transceiver 122, a double data rate (DDR) memory 124 and a plurality of audio transducers 132-136. The processor unit 120 may comprise an Advanced RISC Machines (ARM) processor 120a and a digital signal processing (DSP) processor 120b. The plurality of audio transducers 132-136 may comprise built-in audio transducers and/or external audio transducers, which may be located in external devices.

The central audio hub 110 may comprise suitable logic, circuitry and/or code that may be operable to provide audio signals to, and may receive audio signals from, the built-in audio transducers such as the speakers 132 and the microphones 134 as well as the external audio transducers such as the headsets 136. The audio signals may comprise analog audio signals and/or digital audio signals.

The wireless transceiver 122 may comprise suitable logic, circuitry and/or code that may be operable to receive and/or transmit radio frequency (RF) signals using various communication technologies such as, for example, CDMA, GSM, UMTS, LTE, WiMAX, WiFi and/or Bluetooth. In this regard, RF signals communicated over the wireless transceiver 122 may comprise audio signals. The audio signals may be routed by the central audio hub 110 to the audio transducers 132-136.

The processor unit 120 may comprise suitable logic, circuitry, interfaces, and/or code that may be operable to handle and control operations of various device components such as the transceiver 122. The processor unit 120 may comprise multiple independent processing cores or processors such as the ARM processor 120a and the DSP processor 120b. The processor unit 120 may utilize the ARM processor 120a to process various applications such as enterprise applications and/or multimedia applications. The processor unit 120 may utilize the DSP processor 120b to perform various digital signal processing such as voice and/or speech signal processing.

The ARM processor 120a may comprise suitable logic, circuitry, interfaces, and/or code that may be operable to process data utilizing ARM technology. The ARM processor 120a may load and/or store data and utilize 32-bit instructions for data processing. The ARM processor 120a may comprise a scalable, high-performance processor developed for highly integrated system on chip (SoC) applications.

The DSP processor 120b may comprise suitable logic, circuitry, interfaces, and/or code that may be operable to process data utilizing DSP instructions. The DSP processor 120b may provide ultrafast instruction sequences such as shift and add, and multiply and add, which may be commonly utilized in mathematical signal processing applications.

The DDR memory 124 may comprise suitable logic, circuitry, interfaces and/or code that may be operable to provide primary working memory for the processor unit 120. The DDR memory 124 may be utilized to store information such as executable program instructions and data that may be utilized by the processor unit 120. In an exemplary embodiment of the invention, the DDR memory 124 may allow the ARM processor 120a and the DSP processor 120b to simultaneously access when needed.

Although the ARM processor 120a and the DSP processor 120b are illustrated within the processor unit 120 in FIG. 1, the invention may not be so limited. Accordingly, the processor unit 120 may comprise other processors or cores such as x86 mips without departing from the spirit and scope of various embodiments of the invention.

In an exemplary operation, the mobile device 100 may transmit and/or receive signals over the wireless transceiver 122. The signals may comprise audio data that may be processed utilizing various audio processing cores or audio modules of the central audio hub 110. In various embodiments of the invention, the central audio hub 110 may be operable to provide flexible routing capability and simplified routing paths among the ARM processor 120a, the DSP processor 120b, the audio transducers 132-136 and audio modules of the central audio hub 110. The central audio hub 110 may utilize a common audio processing platform to support various applications or use cases such as voice mixing and FM splitting.

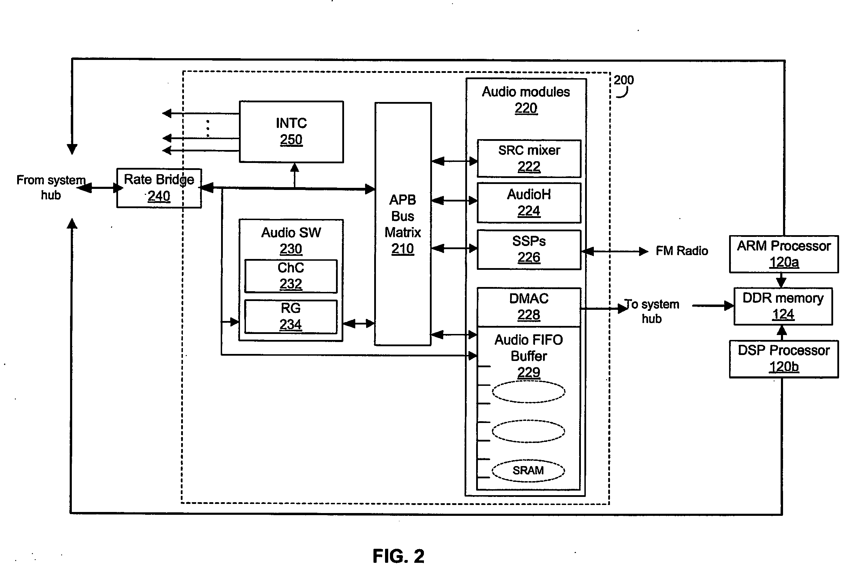

FIG. 2 is a diagram illustrating an exemplary architecture for a central audio hub, in accordance with an embodiment of the invention. Referring to FIG. 2, there is shown a central audio hub 200 that may be incorporated in a multimedia device such as the mobile device 100 to support audio signal processing. The central audio hub 200 comprises an Advanced Peripheral Bus (APB) bus matrix 210, audio modules 220, an audio switch (audio SW) 230, a rate bridge 240 and an interrupt controller (INTC) 250.

The APB bus matrix 210 may comprise suitable logic, circuitry, interfaces, and/or code that may be operable to provide bus matrix communication among devices on APB buses. The APB bus matrix 210, also called crossbar switch, may comprise a plurality of APB busses in parallel which may provide physical links between devices on the APB buses to support high bandwidth data streams. The APB bus matrix 210 may enable and maintain master-slave communications among devices on the APB buses. A device on an APB bus of the APB bus matrix 210 may be configured by the APB bus matrix 210 as a bus master or as a bus slave to support the desired data transaction. One bus master may communicate with up to 32 bus slaves, for example. In an exemplary operation, the APB bus matrix 210 may be operable to configure the audio SW 250 as a bus master and each of the audio modules 220 as a bus slave. The APB bus matrix 210 may run or operate at a rate as indicated by the rate bridge 260.

The audio modules 220 may comprise suitable logic, circuitry, interfaces, and/or code that may be operable to perform various audio processing functions such as rate conversion, noise reduction and voice recognition. The audio modules 220 may comprise an audio Sample Rate Converter (SRC) mixer 222, an audio codec (audioH) 224, one or more Surround Sound Processors (SSPs) 226, a Direct memory access (DMA) controller (DMAC) 228 and an audio FIFO buffer 229. The audio modules 220 may be turned ON or OFF as needed basis in order to save power.

The audio SRC mixer 222 may comprise suitable logic, circuitry, interfaces, and/or code that may be operable to perform audio sampling rate conversion on audio samples. The audio SRC mixer 222 may be operable to perform various audio mixing such as recorded music mixing, film and television mixing and/or live sound mixing.

The audioH 224 may comprise suitable logic, circuitry, interfaces, and/or code that may be operable to characterize audio streams routed via the central audio hub 200 in terms of audio source and audio sink. An audio source is an abstraction over an audio-capturing hardware device such as a microphone, and the software that generates a corresponding audio stream. An audio sink is an abstraction of an audio rendering hardware device such a loudspeaker and its accompanying software, which is used by the loudspeaker to send or receive a corresponding audio stream.

The SSPs 226 may comprise suitable logic, circuitry, interfaces, and/or code that may be operable to receive and process audio data. The SSPs 226 may be triggered utilizing external event triggers, for example.

The DMAC 228 may comprise suitable logic, circuitry, interfaces, and/or code that may be operable to manage transferring of data between external components such as the DDR 124 and the central audio hub 200.

The audio FIFO buffer 229 may comprise suitable logic, circuitry, interfaces, and/or code that may be operable to store audio data. In various embodiments of the invention, the audio FIFO buffer 229 may comprise up to 16 FIFO managers, also called FIFOs, and a single SRAM module of size 8Kbyte, for example. The 8Kbyte SRAM module may be configured to be up to 16 FIFOs. Each FIFO size and threshold may be programmable.

The audio SW 230 may comprise suitable logic, circuitry, interfaces, and/or code that may be operable to route audio data among the surrounding audio modules such as the SRC mixer 222, the audioH 224, the SSPs 226, the DMAC 228 and the audio FIFO buffer 229. In an embodiment of the invention, the audio SW 230 may comprise a channel controller (ChC) 232 and a rate generator (RG) 234. The ChC 232 may comprise suitable logic, circuitry, interfaces, and/or code that may be operable to manage and control audio SW channels to support up to 16 simultaneous stereo routing paths among the surrounding audio modules 220 that are attached to the central audio hub 200. The audio SW 230 may utilize the ChC 232 and the RG 234 to flexibly or selectively route audio data among one or more of the surrounding audio modules 220 such as the speaker 132 and/or the headset 136.

The RG 234 may comprise suitable logic, circuitry, interfaces, and/or code that may be operable to generate event triggers or take external trigger signals to trigger the ChC 232 to move or route data from source to destination. The event triggers may comprise a periodical pulse in the audio sampling rate such as, for example, 8KHz, 16KHaz, 24KHz, 44.1 Khz or 48KHz. The event triggers may also comprise one or more audio hub events such as, for example, a handset input FIFO address utilized by the audioH 224. Each of the event triggers may enable the ChC 232 moving one stereo or mono audio sample from source to destination. In this regard, the audio SW 230 may be triggered to write and/or read audio data whenever needed. In an exemplary embodiment of the invention, the audio SW 230 may be operable to route audio data that may be read by the audio SW 230 from a single audio source to one or more destinations simultaneously.

The rate bridge 240 may comprise suitable logic, circuitry, interfaces, and/or code that may be operable to convert a higher processing speed such as 156 MHz utilized by the ARM processor 120a or the DSP processor 120b into a lower speed such as 26 MHz depending on use cases. The converted speed may be utilized by the APB bus matrix 210 to communicate audio samples with the surrounding audio modules 220.

The INTC 250 may comprise suitable logic, circuitry, interfaces, and/or code that may be operable to manage or control various interrupts with regard to the ARM processor 120a and the DSP processor 120b.

In an exemplary operation, the central audio hub 200 incorporated in a multimedia device such as the mobile device 100 comprises a plurality of audio cores such as the audio modules 220. The APB bus matrix 210 may be utilized to maintain matrix based communication among the audio modules 220. The APB bus matrix 210 may operate at a lower speed such as 26 MHz that may be converted by the rate bridge 240 from a higher speed such as 156 MHz. The audio SW 230 may be configured to support up to 16 audio SW channels that may be utilized to simultaneously support up to 16 stereo routing paths among the surrounding audio modules 220. The audio SW 230 may operate at an audio sampling rate that may be determined or managed by the ChC 232. The central audio hub 200 may utilize the DMAC 228 to control and coordinate audio routing from external components such as the DDR 124 on the host to the central audio hub 200.

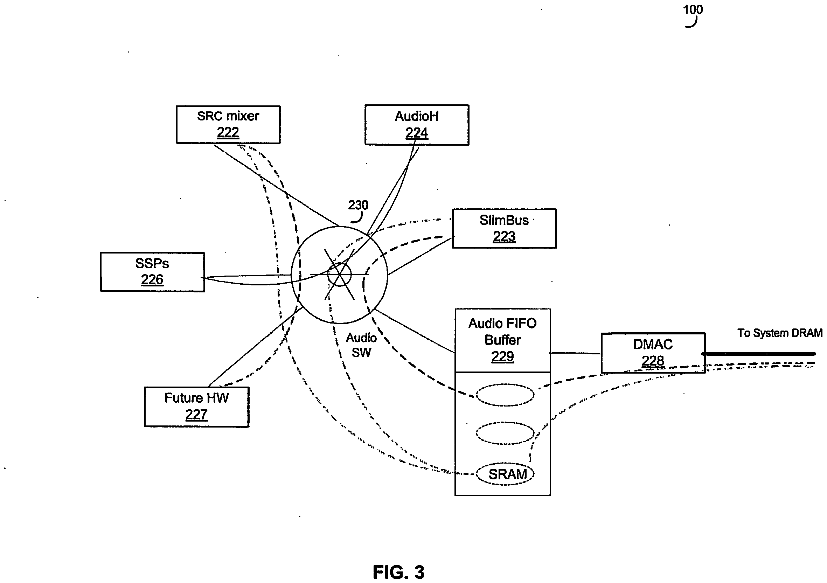

FIG. 3 is a block diagram illustrating an exemplary semi synchronous audio switch implemented in a central audio hub that is operable to route audio samples among audio modules of the central audio hub, in accordance with an embodiment of the invention. Referring to FIG. 3, there is shown an audio switch such as the audio SW 230 that may be utilized by the central audio hub 200 to route audio samples among the surrounding audio modules 220. In various embodiments of the invention, the audio SW 230 may internally route audio samples over various audio routing paths among the surrounding audio modules 220. The surrounding audio modules 220 may comprise a Serial Lowpower Inter-chip Media Bus (SlimBus) 223, the SRC mixer 222, the audioH 224, the SSPs, the DMAC 228, the audio FIFO buffer 229, and future HW 227 that may be required for desired applications. The SlimBus 223 may be utilized to support multiple digital audio samples simultaneously, and may carry multiple digital audio data streams at differing sample rates and bit widths.

The audio SW 230 may move or route one audio sample from the source block such as the SRC mixer 222 to the destination block such as the audioH 224. The audio SW 230 may route audio data over various audio routing paths depending on applications. Audio routing paths may be set up between different surrounding audio modules 220. For example, an audio routing path may be established between the SSPs 226 and the audioH 224. The audio SW 230 may also support an audio routing path established between the audio FIFO buffer 229 and one or more other surrounding audio modules such as the SlimBus 223 and the SRC mixer 222. The audio SW 230 may support up to 16 simultaneous stereo routing paths, for example, among the surrounding audio modules 220.

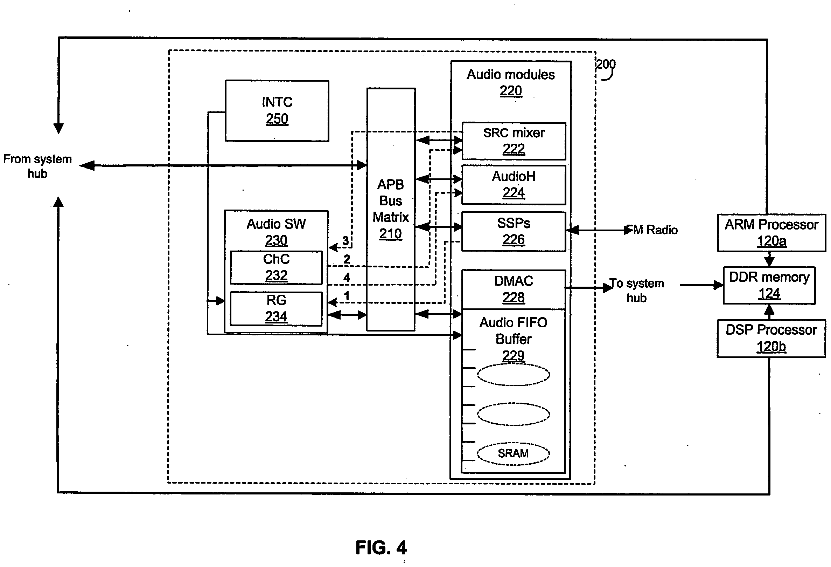

FIG. 4 is a block diagram illustrating an exemplary data flow in a central audio hub for routing audio samples of a single audio stream from an external audio source to a destination audio module of the central audio hub, in accordance with an embodiment of the invention. Referring to FIG. 4, the exemplary data flow may start with the SSPs 226, where audio may be sourced from an external chip such as a FM receiver or an external application processor. The audio samples of the audio stream may be stored in the audio FIFO buffer 229. It may be desired to play back the audio stream through an on-chip codec such as the audioH 224, for example. In this regard, the ChC 232 may be operable to select an audio SW channel with a source FIFO address and a destination FIFO address in the audio FIFO buffer 229 for the audio stream. Depending on the QoS of the audio stream, the ChC 232 may determine or identify an audio sampling rate such as 8 KHz or 48 KHz, and a sample format such as 16 bits/sample or 24 bits/sample, and audio amplifier connections such as mono or stereo, for the audio stream. The RG 234 may periodically or aperiodically generate event triggers at the determined audio sampling rate. The SSPs 226 may write audio samples of the audio stream to the audio SW 230. In other words, the ChC 232 may read the audio samples from the audio FIFO buffer 229 at the source FIFO address. The audio SW 230 may route the audio samples to the SRC mixer 222 for sampling rate conversion. The SRC mixer 222 may convert the sampling rate on the audio samples and send the rate converted audio samples back to the audio SW 230. The audio SW 230 may read out or provide the rate converted audio samples to audio sink such as the headsets 136 via the audioH 224. More specifically, the audio SW 230 may write the rate converted audio samples in the audio FIFO buffer 229 at the destination FIFO address.

Although an audio stream from an external audio source that is routed to a single destination audio module of the central audio hub 200 is illustrated in FIG. 4, the invention may not be so limited. Accordingly, the invention may be applied to route an audio stream from an external audio source to multiple destination audio modules of the central audio hub 200 without departing from the spirit and scope of various embodiments of the invention. In this regard, in order to support the audio stream splitting case, the ChC 232 may read audio samples from the audio FIFO buffer 229 at the source FIFO address. The audio SW 230 may pass the audio samples to the SRC mixer 222 for sampling rate conversion if needed. The SRC mixer 222 may convert the audio sampling rate on the audio samples and send the converted audio samples back to the audio SW 230. The audio SW 230 may then provide to audio sink such as the headsets 136 by writing the converted audio samples in the audio FIFO buffer 229 at the multiple desired destination FIFO addresses such as 4 desired destination FIFO addresses.

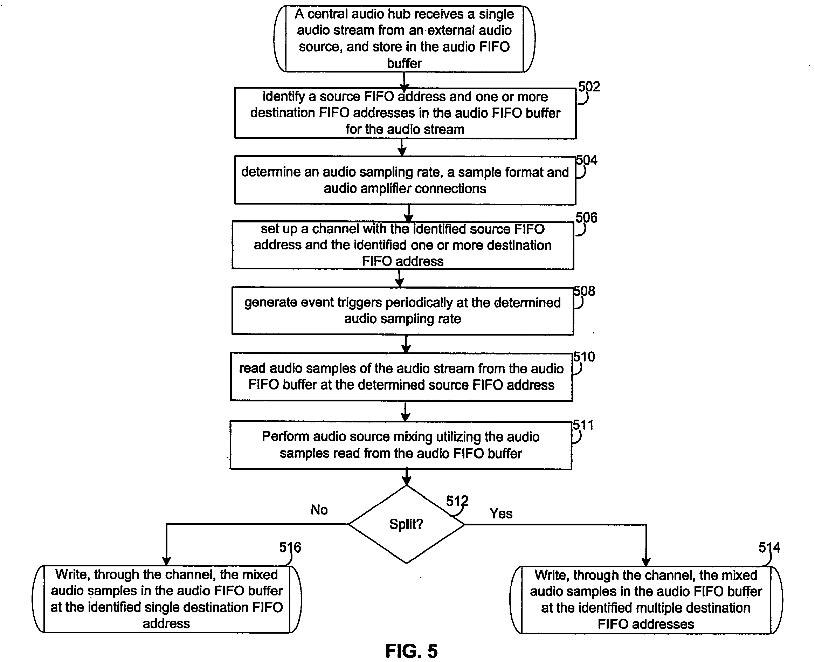

FIG. 5 is a block diagram exemplary steps that may be performed by a central audio hub to route audio samples of a single audio stream from an external audio source to one or more destination audio modules of the central audio hub, in accordance with an embodiment of the invention. Referring to FIG. 5, the central audio hub 200 may receive a single audio stream from an external audio source such as a FM radio receiver connected to the central audio hub 200. The received audio stream may be stored in the audio FIFO buffer 229. The exemplary steps may start with step 502, where the ChC 230 may be operable to identify or determine a source FIFO address and one or more destination FIFO addresses in the audio FIFO buffer 229 for the audio stream. In step 504, the ChC 230 may determine an audio sampling rate, a sample format and audio amplifier connections such as mono or stereo. In step 506, the audio SW 230 may set up an audio SW 230 channel with the identified source FIFO address and the identified one or more destination FIFO address. In step 508, the RG 234 may generate event triggers periodically at the determined audio sampling rate. In step 510, the ChC 234 may read one stereo or mono audio sample from the audio FIFO buffer 229 at the determined source FIFO address. In step 511, the SRC mixer 222 may mix the audio samples read from the audio FIFO buffer 229. In step 512, it may be determined whether the mixed audio stream is split. In instances where the mixed audio stream is split, then in step 514, the audio SW 230 may write, through the selected audio SW channel, the mixed audio samples in the audio FIFO buffer 229 at the identified multiple destination FIFO addresses.

In step 512, in instances where the mixed audio stream is not split, then in step 516, the audio SW 230 may write, through the selected audio SW channel, the mixed audio samples in the audio FIFO buffer 229 at the identified single destination FIFO addresses.

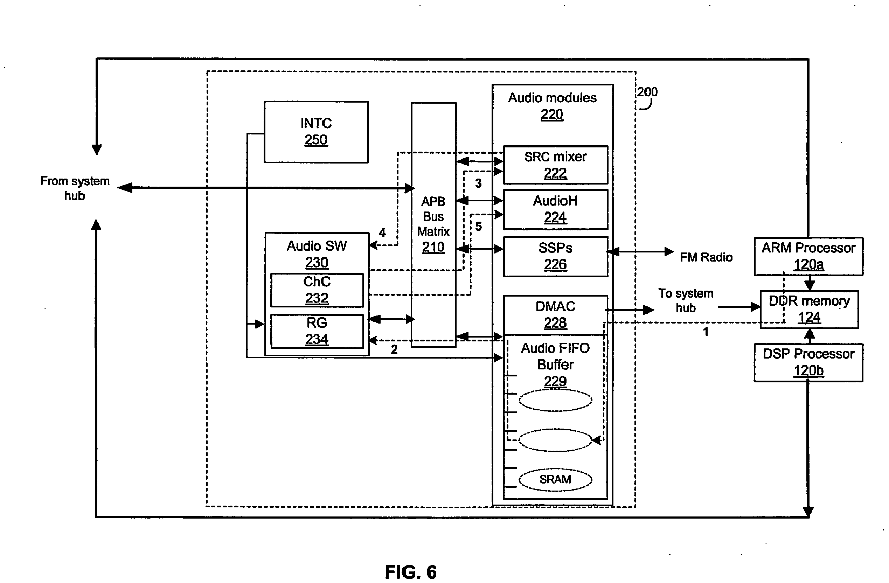

FIG. 6 is a block diagram illustrating an exemplary data flow in a central audio hub for routing audio samples of a single audio stream between an external double data rate memory and a destination audio module of the central audio hub, in accordance with an embodiment of the invention. Referring to FIG. 6, the exemplary data flow may start with the DDR memory 124, where an audio source may come from other host components such as the ARM processor 120a. The DDR memory 124 may comprise one or more render buffers utilized for playback. It may be desired to play back the audio stream from the ARM processor 120a through an on-chip codec such as the audioH 224, for example. In this regard, the DMAC 228 may manage the audio FIFO buffer 229 to fetch audio samples of the desired audio stream from the DDR memory 124. The DMAC 228 may also communicate a source FIFO address and a destination FIFO address in the audio FIFO buffer 229 for the audio stream. The ChC 230 may be operable to select an audio SW channel with the source FIFO address and the destination FIFO address. The audio FIFO buffer 229 may write the fetched audio samples to the audio SW 230. In other words, the ChC 234 may read audio samples from the audio FIFO buffer 229 at the source FIFO address. The audio SW 230 may route the audio samples to the SRC mixer 222 for sampling rate conversion if needed. The SRC mixer 222 may convert the sampling rate on the audio samples and send the converted audio samples back to the audio SW 230. The audio SW 230 may provide the converted audio samples to audio sink such as the headsets 136 via the audioH 224. More specifically, the audio SW 230 may write the converted audio samples in the audio FIFO buffer 229 at the destination FIFO address.

Although an audio stream from an external audio source stored in the DDR memory 124 that is routed to a single destination audio module of the central audio hub 200 is illustrated in FIG. 6, the invention may not be so limited. Accordingly, the invention may be applied to route an audio stream from an external audio source stored in the DDR memory 124 to multiple destination audio modules of the central audio hub 200 without departing from the spirit and scope of various embodiments of the invention.

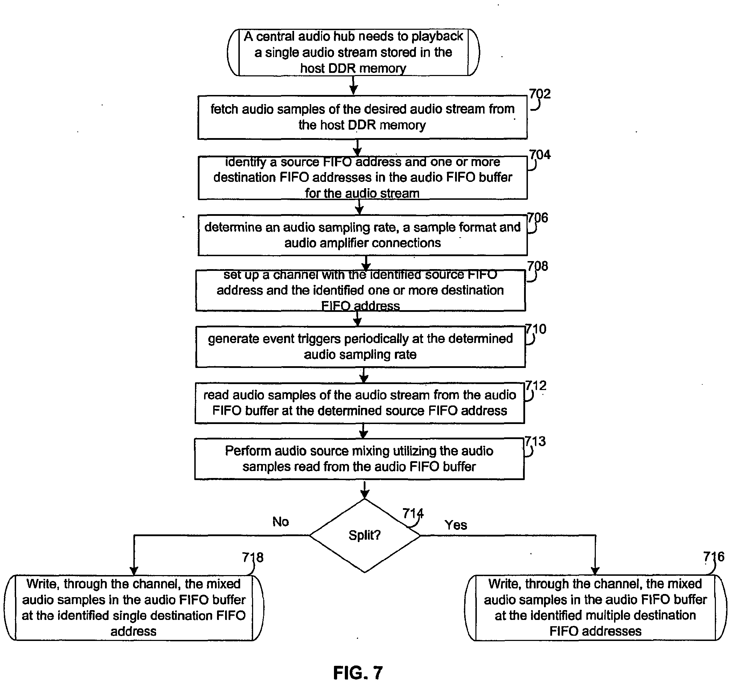

FIG. 7 is a block diagram illustrating exemplary steps that may be performed by a central audio hub to route audio samples of a single audio stream between an external double data rate memory and one or more audio modules of the central audio hub, in accordance with an embodiment of the invention. Referring to FIG. 7, the central audio hub 200 may need to playback a single audio stream stored in the host DDR memory 124. The single audio stream may be provided by other host components such as the ARM processor 120a. Audio samples of the audio stream may be stored in the audio DDR memory 124. The exemplary steps may start with step 702, where the DMAC 228 may manage the audio FIFO buffer 229 to fetch audio samples of the audio stream from the DDR memory 124. In step 704, the DMAC 228 may identify a source FIFO address and one or more destination FIFO addresses in the audio FIFO buffer 229 for the audio stream. In step 706, the ChC 230 may determine an audio sampling rate, a sample format and audio amplifier connections such as mono or stereo for routing the audio stream. In step 708, the ChC 230 may be operable to select an audio SW channel with the source FIFO address and the one or more destination FIFO addresses. In step 710, the RG 234 may generate event triggers periodically at the determined audio sampling rate. In step 712, the ChC 234 may read audio samples of the audio stream from the audio FIFO buffer 229 at the determined source FIFO address. In step 713, the SRC mixer 222 may mix the audio samples read from the audio FIFO buffer 229. In step 714, it may be determined whether the mixed audio stream is split. In instances where the mixed audio stream is split, then in step 716, the audio SW 230 may write, through the selected audio SW channel, the mixed audio samples in the audio FIFO buffer 229 at the identified multiple destination FIFO addresses.

In step 714, in instances where the mixed audio stream is not split, then in step 718, the audio SW 230 may write, through the selected audio SW channel, the mixed audio samples in the audio FIFO buffer 229 at the identified single destination FIFO addresses.

In various exemplary aspects of the method and system for processing audio signals in a central audio hub, the central audio hub 200 may comprise various audio processing blocks such as, for example, the audio SW 230, the APB bus matrix 210, the DMAC 228 and the audio FIFO buffer 229. The central audio hub 200 may be operable to read, via the DMAC 228, audio samples of a desired audio stream from the audio FIFO buffer 229. For example, the RG 234 in the audio SW 230 may generate event triggers at various audio sampling rates such as, for example, 8KHz, 16KHaz, 24KHz, 44.1 Khz or 48KHz. The ChC 232 in the audio SW 230 may be triggered to set up audio SW channels to move audio samples from a source to one or more destinations.

The audio SW 230 may utilize the audio SW channels to read audio samples, via the DMAC 228, from the audio FIFO buffer 229. The audio SW 230 may then route the audio samples from the audio FIFO buffer 229 to one or more audio modules or audio cores that are communicatively coupled to the central audio hub 200. In various embodiments of the invention, the audio SW 230 may be operable to route the audio stream that may be received by central audio hub 200 directly from an external application processor such as a FM radio receiver. The audio SW 230 may also route the audio stream that may be received by central audio hub 200 directly from an external DDR memory such as the DDR memory 124. In instances where the audio stream is rendered by the DDR memory 124, the audio samples of the audio stream may first be moved from the DDR memory 124 to the audio FIFO buffer 229. In this regard, the audio FIFO buffer 229 may send a request to the DMAC 228 for the audio samples of the audio stream stored in the DDR memory 124. Upon receiving the request from the audio FIFO buffer 229, the DMAC 228 may fetch the audio samples of the audio stream from the DDR memory 124. The DMAC 228 may store the fetched audio samples of the audio stream into the audio FIFO buffer 229 for audio routing among the surrounding audio modules 220. In an exemplary embodiment of the invention, the ChC 232 in the audio SW 230 may be operable to determine an audio sampling rate and a sample format for the audio samples of the audio stream stored in the audio FIFO buffer 229. The RG 234 in the audio SW 230 may generate the event triggers at the determined audio sampling rate. The audio SW 230 may then read the audio samples from the audio FIFO buffer 229 utilizing the determined sample format. The ChC 232 may route the audio samples of the audio stream to the one or more destination audio modules.

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for processing audio signals in a central audio hub.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication, the method comprising:
in a central audio hub that comprises an audio switch, a bus matrix, and an audio buffer:
reading audio samples of an audio stream from said audio buffer in response to event triggers from said audio switch; and
routing said audio samples over said bus matrix to one or more of a plurality of audio modules that are communicatively coupled to said central audio hub, wherein said plurality of audio modules comprise an audio codec, an audio interface.

2. The method according to claim 1, wherein said audio stream is received by said central audio hub directly from an external application processor.

3. The method according to claim 1, wherein said audio stream is received by said central audio hub from an external double data rate memory.

4. The method according to claim 3, comprising receiving by accessing a direct memory access controller, a request from said audio buffer for said audio samples of said audio stream in said external double data rate memory.

5. The method according to claim 4, comprising fetching by said direct memory access controller, said audio samples of said audio stream from said external double data rate memory in response to said request.

6. The method according to claim 5, comprising storing said fetched audio samples of said audio stream into said audio buffer for said routing.

7. The method according to claim 1, comprising determining a sampling rate and a sample format for said audio samples of said audio stream in said audio buffer.

8. The method according to claim 7, comprising generating by said audio switch, said event triggers at said determined sampling rate.

9. The method according to claim 8, comprising reading said audio samples of said audio stream, utilizing said determined sample format, from said audio buffer in response to said generated event triggers.

10. The method according to claim 9, comprising routing said audio samples in said determined sample format to said one or more of said plurality of audio modules.

11. A system for communication, the system comprising:
one or more processors and/or circuits for use in a central audio hub, said one or more processors and/or circuits comprises an audio switch, a bus matrix, and an audio buffer, wherein said one or more processors and/or circuits are operable to:
read audio samples of an audio stream from said audio buffer in response to event triggers from said audio switch; and
route said audio samples over said bus matrix to one or more of a plurality of audio modules that are communicatively coupled to said central audio hub, wherein said plurality of audio modules comprise an audio codec, an audio interface.

12. The system according to claim 11, wherein said audio stream are received by said central audio hub directly from an external application processor.

13. The system according to claim 11, wherein said audio stream are received by said central audio hub from an external double data rate memory.

14. The system according to claim 13, wherein said one or more processors and/or circuits are operable to receive by accessing a direct memory access controller, a request from said audio buffer for said audio samples of said audio stream in said external double data rate memory.

15. The system according to claim 14, wherein said one or more processors and/or circuits are operable to fetch by said direct memory access controller, said audio samples of said audio stream from said external double data rate memory in response to said request.
